# FASCICULE DE BREVET EUROPEEN

(11) **EP 3 099 533 B1**
(45) Date de publication et mention de la délivrance du brevet: **02.05.2018**
(21) Numéro de dépôt: 15702528.9
(22) Date de dépôt: 06.01.2015
(51) Int. Cl.: B60R 21/214, B60J 3/02

(54) **DISPOSITIF DE FIXATION D'UN PARE-SOLEIL ET D'UN MODULE DE COUSSIN GONFLABLE**
VORRICHTUNG ZUR BEFESTIGUNG EINER SONNENBLENDE UND EINES AIRBAGMODULS
DEVICE FOR ATTACHING A SUN VISOR AND AN AIRBAG MODULE

(30) Priorité: 30.01.2014 FR 1450762
(43) Date de publication de la demande: 07.12.2016
(73) Titulaire: PSA Automobiles SA, 78300 Poissy (FR)
(72) Inventeur: VILLA, Laurent, F-91460 Marcoussis (FR)
(86) Numéro de dépôt international: PCT/FR2015/050021
(87) Numéro de publication internationale: WO 2015/114230

(56) Documents cités:
- WO-A1-03/024751
- WO-A2-03/104033
- US-A1- 2004 090 050
- US-A1- 2005 040 627

## Description

L'invention a trait au domaine des véhicules automobiles, plus particulièrement à la fixation d'un pare-soleil au toit du véhicule. Plus particulièrement encore l'invention a trait à la fixation d'un pare-soleil au toit du véhicule lorsque celui-ci comprend un accessoire, tel qu'un module de coussin gonflable, disposé en haut du pare-brise.

La réalisation d'un véhicule automobile avec un accessoire tel qu'un module de coussin gonflable logé sur le toit est connue. Un tel module est généralement réalisé pour la protection du conducteur et/ou du passager, il est précisément destiné à protéger au mieux une personne lors d'une collision du véhicule. Dans le cas d'une collision frontale, qui est celle généralement prioritaire pour laquelle le véhicule est ainsi réalisé, le torse et la tête de la personne sont les parties du corps qu'un coussin déployé est apte à protéger. Pour ce faire une cartouche de gaz comprimé est libérée de manière à gonfler le coussin de manière quasi instantanée et le déployer en avant de la personne. La forme du déploiement final d'un tel coussin est obtenue principalement par la géométrie qui lui est donnée, et il peut être optimisé selon l'habitacle et les équipements intérieurs. La dynamique d'ouverture du coussin gonflable et les effets qui y sont liés sont des critères importants de sa réalisation, il est recherché par exemple qu'une telle ouverture jusqu'au déploiement ne génère pas de risques supplémentaires de blessure pour le passager. Or il est aussi connu de loger le module de manière à ce qu'il ne soit pas visible, par exemple derrière la garniture de toit, celle-ci étant généralement à proximité de la tête du conducteur ou du passager. La garniture est un élément décoratif du toit. Un pare-soleil en tant qu'élément fonctionnel du toit est monté sous la garniture à proximité encore plus immédiate de la personne à protéger. D'autres éléments fonctionnels peuvent aussi être réalisés sur le toit, par exemple un rétroviseur ou des éclairages. Il est donc recherché de réaliser le coussin gonflable de toit tout en s'accommodant de tels éléments fonctionnels ou décoratifs de manière à éviter de générer des risques supplémentaires de blessure pour le passager.

Le document de brevet publié US 2005/0040627A1 divulgue un véhicule comprenant un module de coussin gonflable logé sur le toit en haut du pare-brise et au-dessus d'une garniture de toit, un pare-soleil se trouvant en dessous de la garniture. Le module de coussin gonflable comprend un boîtier vraisemblablement métallique et de section généralement en forme de U couché avec l'ouverture vers l'avant. La garniture ainsi que le pare-soleil sont montés sur le bord avant de la paroi inférieure du boîtier. La portion avant de la garniture est configurée pour plier vers le bas sous la pression du coussin lors de son déploiement. Cet enseignement est toutefois silencieux quant à la manière de favoriser ce mouvement. Il est intéressant en ce qu'il permet le déploiement du coussin gonflable vers l'avant en franchissant la barrière formée par la garniture. Il présente toutefois l'inconvénient que la paroi inférieure à la laquelle le pare-soleil est fixé est susceptible de plier vers le bas lors du déploiement du coussin et, partant, de déplacer le pare-soleil. Ceci est d'autant plus vrai que la portion avant de la garniture est rigide, notamment au niveau de la ligne de pivotement. Le déplacement du pare-soleil est susceptible de blesser le passager du véhicule assis à l'avant du véhicule. Le document WO 03/104033 A2 divulgue un dispositif de fixation selon le préambule de la revendication 1. L'invention a pour objectif d'assurer une fixation stable du pare-soleil d'un véhicule, en présence d'un équipement, tel qu'un coussin gonflable, logé entre le toit et la garniture, à proximité du pare-soleil.
L'invention est définit par les caractéristiques de la revendication 1. Selon un mode avantageux de l'invention, les portions longitudinales et/ou la portion transversale sont réalisées sous forme de pattes de fixation. Les portions longitudinales peuvent cloisonner latéralement l'espace délimité pour le logement d'équipement.
Avantageusement, les pattes de fixations comprennent des orifices de fixation de forme circulaire, et/ou rectangulaire et/ou carrée, aptes à recevoir des moyens de fixation du pare-soleil.

Avantageusement, la hauteur de l'espace délimité par le dispositif de fixation est de plus de 40mm.
Selon un mode avantageux de l'invention, la plaque de soutien présente des nervures, préférentiellement formées par déformation de la plaque et préférentiellement s'étendant longitudinalement.
Selon un mode avantageux de l'invention, la plaque de soutien comprend une portion arrière coudée par rapport à la portion principale de la plaque, de manière à pouvoir coopérer par contact avec la portion transversale formant une nervure. La portion arrière peut comprendre des goujons aptes à coopérer par engagement avec des orifices dans la portion transversale. Les goujons peuvent alors s'étendre suivant une direction généralement longitudinale. La portion coudée peut former un angle moyen compris entre 80° et 100° avec la portion principale.
Avantageusement, la plaque de soutien est en aluminium ou en fer.
Selon un mode avantageux de l'invention, la portion transversale est configurée pour être fixée, préférentiellement par soudage, directement à au moins une des portions longitudinales.
Avantageusement, la portion transversale et une des portions longitudinales forment une seule pièce.
Avantageusement, les portions transversales et longitudinales sont d'épaisseur de moins de 1.5 millimètres, en acier à haute résistance à la rupture. Avantageusement, l'acier a une limite élastique Re > 450MPa et une résistance à la rupture Rm > 750MPa, il peut être de nuance DP 780.
L'invention a également pour objet, un véhicule automobile avec un pare-brise et un toit avec une traverse avant, comprenant un équipement fixé à la traverse de toit, en haut du pare-brise ; un pare-soleil, fixé à la traverse de toit, en-dessous de l'équipement, remarquable en ce qu'il comprend, en outre, un dispositif de fixation conforme à l'invention, le pare-soleil étant fixé aux portions longitudinales dudit dispositif et l'équipement étant fixé aux portions longitudinales et à la portion transversale du dispositif de fixation.

Avantageusement, la dimension de l'équipement dans le sens longitudinal du véhicule est comprise entre 200mm et 300mm.

Avantageusement, la dimension de l'équipement dans le sens transversal du véhicule est comprise entre 250mm et 350mm.

Avantageusement, la dimension de l'équipement en hauteur est comprise entre 40mm et 80mm.

Selon un mode avantageux de l'invention, l'équipement est un module de coussin gonflable configuré pour se déployer essentiellement vers l'avant et vers le bas, devant le conducteur ou le passager avant du véhicule.

Avantageusement, le module de coussin gonflable comprend une enveloppe extérieure en matériau plastique ou en fibre.

Selon un mode avantageux de l'invention, les portions longitudinales et/ou la portion transversale du dispositif de fixation sont soudées à la traverse de toit. La portion longitudinale vers l'extérieur au véhicule est préférentiellement soudée à un gousset à niveau de la traverse, ledit gousset étant soudé sur l'arc de pavillon.

Avantageusement, la traverse de toit est soudée à la couverture de toit le long de son bord avant.

Selon un mode avantageux de l'invention, le pare-soleil comprend une liaison pivotante fixée à une des portions longitudinales du dispositif de fixation et un crochet détachable fixé à l'autre des deux portions longitudinales.

Avantageusement, la fixation du pare-soleil est réalisée par clipage et/ou par clipage / empiochage.

Les mesures de l'invention sont intéressantes en ce qu'elles permettent à l'équipement, en l'occurrence le module de coussin gonflable, de travailler, en l'occurrence de s'ouvrir vers l'avant en franchissant la garniture, celle-ci s'ouvrant en avant de la personne protégée sans générer de risques supplémentaires de blessure pour le passager. En effet, le pare-soleil monté sur le toit via le dispositif de fixation est rigidement arrimé au toit et ne se déplace pas lors du déploiement du coussin.

D'autres caractéristiques et avantages de la présente invention seront mieux compris à l'aide de la description et des dessins parmi lesquels :
- La figure 1 est une illustration de la partie avant droite de l'habitacle d'un véhicule automobile en situation de collision avant, le véhicule étant conforme à l'invention, un passager étant en position contre un coussin gonflable en position déployée ;
- La figure 2 est une vue en éclaté du toit de la figure 1 ;
- La figure 3 est une vue en section du toit des figures 1 et 2 ;
- La figure 4 est une vue de dessous du toit des figures 1 à 3, le toit étant représenté sans garniture, deux dispositifs de fixation de pare-soleil étant représentés, l'un des deux étant représenté sans plaque de soutien ;
- La figure 5 est une vue de dessous du toit de la figure 4, des pare-soleil étant montés sur les dispositifs de fixation ;

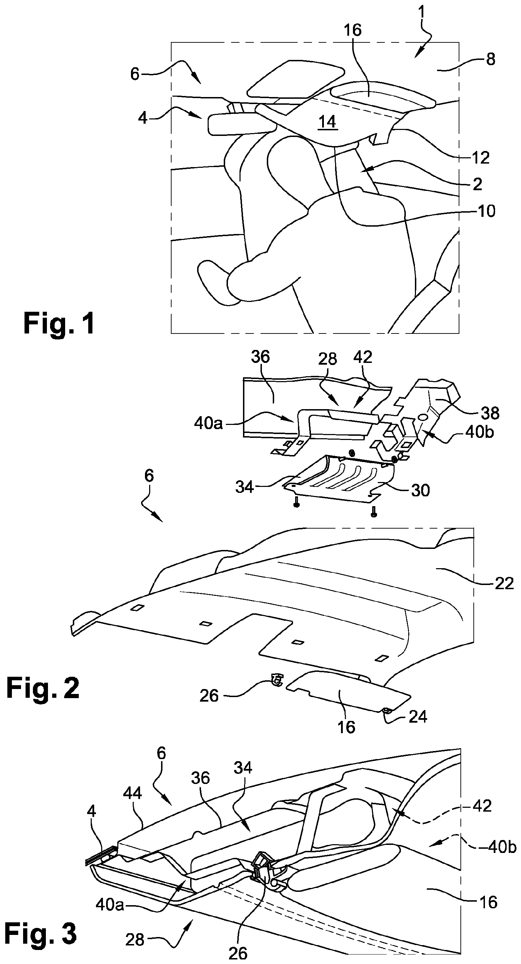

La figure 1 illustre une mise en situation dans un habitacle 1 d'une collision frontale d'un véhicule automobile, un passager avant étant en position contre un coussin gonflable 2 déployé. On y voit un pare-brise 4, un toit 6, une garniture de pavillon de toit 8, le coussin gonflable 2 parti du toit 6 est essentiellement déployé vers l'avant et vers le bas, devant le passager de manière à le protéger. Pour arriver dans cette position, le coussin gonflable 2, libéré par du gaz sous pression, a forcé une ouverture de la garniture de pavillon de toit 8. On peut observer sur l'image le bord avant 10 ainsi que les bords latéraux 12 de la portion de garniture 14 dont l'ouverture a ainsi été forcée. Le toit comprend un pare-soleil 16 disposé en arrière de la portion de garniture 14 et fixé au toit 6 ; le coussin gonflable 2, même après déploiement n'a pas engendré de déplacement du pare-soleil 16. En l'occurrence le véhicule comprend d'autres équipements fonctionnels à proximité de la portion de garniture 14, ces équipements ne se voyant pas non plus endommagés ou déplacés vers le passager lors du déploiement du coussin gonflable 2. La situation illustrée ci-avant pour le passager du véhicule peut aussi être celle du conducteur du véhicule, les éléments présentés plus haut comme se trouvant à l'avant droit de l'habitacle 1 devenant référencés à l'avant gauche de l'habitacle.

La figure 2 est une vue en éclaté du toit 6 du véhicule. Le toit 6 comprend un panneau 22 de garniture de pavillon. En dessous du panneau 22 est logé un pare-soleil 16 avec une liaison pivotante 24 et un crochet détachable 26. Au-dessus du panneau 22 sont logés un dispositif de fixation 28 d'un pare-soleil 16, une plaque de soutien 30 du dispositif 28, un module de coussin gonflable 34 étant présenté en position, soutenu par la plaque 30. Un équipement de coussin gonflable peut comprendre un module 34 et sa plaque 30. Au-dessus encore sur l'image, le toit 6 comprend une traverse de toit 36 et un gousset latéral 38. Plus précisément, le dispositif de fixation 28 comprend : deux portions longitudinales (40a, 40b) fixées à la traverse de toit 36 et recevant chacune, un élément de fixation du pare-soleil 16 ; une portion transversale 42 disposée à l'arrière des portions longitudinales. En l'occurrence, la portion longitudinale gauche 40a et la portion transversale 42 sont formées en une pièce recevant le crochet détachable 26 du pare-soleil 16, cette portion 40a comprenant le crochet 26 étant vers l'intérieur du véhicule ; la portion longitudinale droite 40b reçoit la liaison pivotante 24 et est montée au toit 6 au niveau de la traverse 36 via le gousset latéral 38, cette portion 40b comprenant la liaison pivotante 24 étant vers l'extérieur du véhicule.

La figure 3 est une vue en section du toit 6 du véhicule automobile comprenant le dispositif de fixation 28 d'un pare-soleil 16. On peut voir le pare-brise 4 collé à une feuillure de la couverture de toit 44, celle-ci recevant aussi la traverse 36 elle-même soudée sur son bord avant à la couverture de toit 44. Le dispositif de fixation de pare-soleil 28 peut être soudé à la traverse. On peut voir précisément le crochet détachable 26 du pare-soleil 16 monté sur la portion longitudinale 40a du dispositif de fixation 28. Les deux portions longitudinales (40a, 40b) et la portion transversale 42 délimitent un espace nécessaire pour le logement d'un équipement 34. La dimension de l'équipement peut être comprise entre 200mm et 300mm dans le sens longitudinal, entre 250mm et 350mm dans le sens transversal, et entre 40mm et 80mm dans la hauteur. L'équipement 34 peut être un module de coussin gonflable, le module 34 étant configuré pour que le sac gonflable qu'il renferme se déploie essentiellement vers l'avant et vers le bas, devant le conducteur ou le passager avant du véhicule.

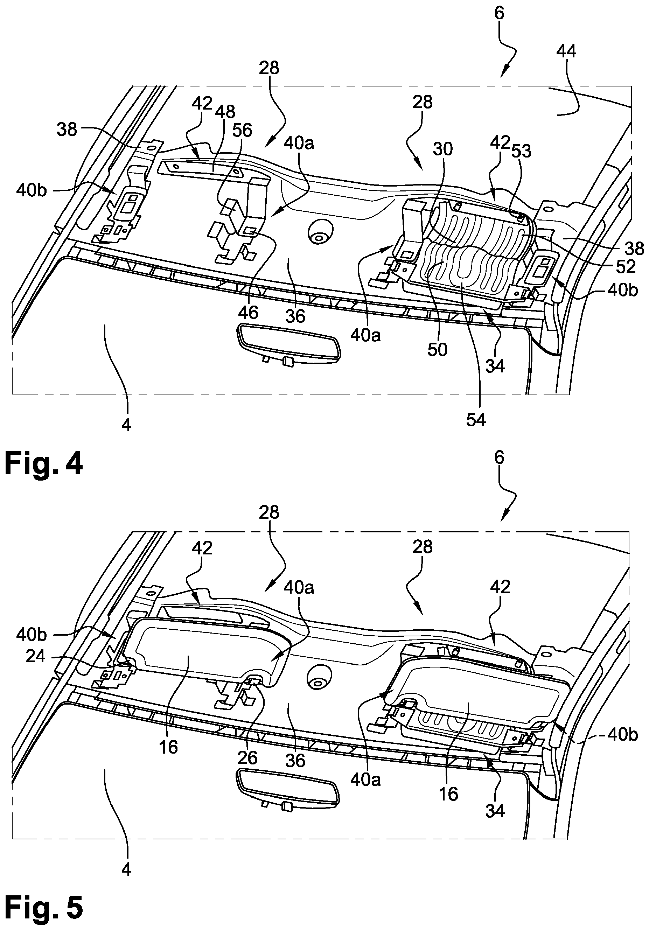

La figure 4 est une vue de dessous du toit 6, le toit étant représenté sans garniture. Les portions longitudinales (40a, 40b) et la portion transversale 42 du dispositif de fixation 28 sont réalisées sous forme de pattes de fixation dans lesquelles sont réalisés des orifices de fixation 46. Les orifices de fixation 46 du pare-soleil sont précisément visibles sur les portions longitudinales (40a, 40b) par leur forme carrée et/ou rectangulaire, ces orifices 46 pouvant également être de forme circulaire. Une patte de fixation est réalisée sous forme de nervure 48 dans la portion transversale 42 du dispositif 28. La portion transversale 42 forme en l'occurrence une seule pièce avec la portion longitudinale 40a, elle peut être fixée par soudage à au moins une des portions longitudinales (40a, 40b).

Deux dispositifs de fixation 28 de pare-soleil sont représentés au-dessus des deux places avant, l'un des deux dispositifs, à droite sur l'image, étant équipé d'une plaque de soutien 30. La plaque de soutien 30 est fixée aux portions longitudinales (40a, 40b) et à la portion transversale 42. La plaque de soutien 30 comprend des nervures 50, celles-ci pouvant être formées par déformation de la plaque et pouvant s'étendre dans la direction longitudinale au véhicule. Ces nervures 50 renforcent la plaque de soutien 30 ce qui est une mesure intéressante dans l'occurrence où un équipement, tel qu'un module de coussin gonflable 34, est soutenu par la plaque 30, celle-ci faisant alors office de paroi inférieure rigide. La plaque de soutien 30 comprend une portion arrière 52 formant un coude avec un angle moyen compris entre 80° et 100° avec la portion principale 54 dela plaque 30. Cette forme permet de coopérer par contact avec la nervure 48 du dispositif de fixation 28. La portion arrière 52 peut comprendre des goujons 53 aptes à coopérer par engagement avec des orifices dans la portion transversale 42. Les goujons 53 peuvent alors s'étendre suivant une direction généralement longitudinale. La plaque de soutien 30 peut être en aluminium ou en fer.

La figure 4 illustre enfin sur sa partie gauche un dispositif de fixation 28 d'un pare-soleil ou l'on peut voir précisément les portions longitudinales formant des cloisons latérales 56 de l'espace délimité pour le logement d'équipement 34. La portion longitudinale 40a, vers l'intérieur du véhicule, est soudée à la traverse avant 36, la portion longitudinale 40b, vers l'extérieur du véhicule, est soudée au niveau de la traverse 36 à un gousset 38, les traverses 36 et gousset 38 étant en arrière du pare-brise 4. La traverse 36 est soudée à la couverture de toit 44 via une feuillure, le gousset 38 est soudé à une portion latérale de l'arc de pavillon du véhicule, à niveau de la traverse 36. Cette réalisation est similaire sur l'autre côté du véhicule à droite sur l'image.

Dans le cas d'un logement d'équipement 34, tel qu'un module de coussin gonflable logé dans l'espace délimité par le dispositif de fixation 28 de pare-soleil 16, le module 34 peut se voir cloisonné sur ses faces non destinées à l'ouverture du sac gonflable qu'il renferme, seule la face avant du module vers le pare-brise 4 étant destinée à s'ouvrir; le module 34 peut être cloisonné par la traverse de toit 36 sur son dessus ; par la plaque de soutien 30 sur son dessous et son arrière via sa portion principale 54 et sa portion arrière 52, respectivement ; par les parties latérales 56 des portions longitudinales (40a , 40b) du dispositif de fixation 28 sur ses côtés. Cette mesure est intéressante en ce que la réalisation du véhicule peut alors s'acquitter d'une fourniture d'équipement à paroi rigide ce qui est avantageux sur la masse et le coût associés. Un module de coussin gonflable 34 logé dans l'espace défini par le dispositif de fixation peut comprendre une enveloppe extérieure en matériau plastique ou en fibre.

La figure 5 est une vue similaire à la figure 4 et où l'on peut voir des pare-soleil 16 montés sur chacun des dispositifs de fixation 28. La fixation des pare-soleil sur les pattes de fixation des portions longitudinales (40a, 40b) du dispositif 28 peut être réalisée par des moyens de fixation du type clipage et/ou clipage / empiochage ; l'utilisation d'une tôle de moins de 1.5mm d'épaisseur pour ces portions étant favorable à l'utilisation de tels moyens. Un équipement 34 peut être logé au toit 6 à chacun des dispositifs de fixation 28 montés sur la traverse 36. La liaison pivotante 24 du pare-soleil 16 est fixée à la portion longitudinale 40b, le crochet détachable 26 est fixé à la portion longitudinale 40a, du dispositif de fixation 28, respectivement. Les portions longitudinales (40a, 40b) et transversale 42 du dispositif 28 peuvent être réalisées en tôle à moyenne résistance à la rupture. Elles peuvent aussi être réalisées en tôle d'acier à haute résistance à la rupture, cette dernière réalisation étant recommandée dans le cas d'un logement d'équipement 34 tel qu'un module de coussin gonflable. Dans ce cas, les portions du dispositif 28 peuvent être en tôle avec une limite élastique Re > 450MPa et une résistance à la rupture Rm > 750MPa, par exemple la nuance d'acier DP780, un acier double phase (martensite dans une matrice ferritique), satisfait à ces caractéristiques.

## Revendications

1. Dispositif de fixation (28) d'un pare-soleil (16) au toit (6) d'un véhicule automobile, comprenant :
- deux portions longitudinales (40a, 40b) aptes à être fixées à une traverse du toit (36) et à recevoir, chacune, un élément de fixation (24, 26) du pare-soleil (16); et
- une portion transversale (42) disposée à l'arrière des portions longitudinales (40a, 40b);
les portions longitudinales (40a, 40b) et transversale (42) délimitant un espace apte à recevoir un équipement (34) tel qu'un module de coussin gonflable, comprenant, en outre, une plaque de soutien (30) apte être fixée aux portions longitudinales (40a, 40b) et/ou à la portion transversale (42) et à soutenir l'équipement (34), **caractérisé en ce que** la plaque de soutien (30) présente des nervures (50), préférentiellement formées par déformation de la plaque (30), qui s'étendent longitudinalement.

2. Dispositif (28) selon la revendication 1, **caractérisé en ce que** les portions longitudinales (40a, 40b) et/ou la portion transversale (42) sont réalisées sous forme de pattes de fixation.

3. Dispositif (28) selon l'une des revendications précédentes, **caractérisé en ce que** la plaque de soutien (30) comprend une portion arrière (52) coudée par rapport à la portion principale (54) de la plaque (30), de manière à pouvoir coopérer par contact avec la portion transversale (42) formant une nervure (48).

4. Dispositif (28) selon l'une des revendications 1 à 3, **caractérisé en ce que** la portion transversale (42) est configurée pour être fixée, préférentiellement par soudage, directement à au moins une des portions longitudinales (40a 40b).

5. Véhicule automobile avec un pare-brise (4) et un toit (6) avec une traverse avant (36), comprenant :
- un équipement (34) fixé à la traverse de toit (36), en haut du pare-brise (4) ;
- un pare-soleil (16), fixé à la traverse de toit (36), en-dessous de l'équipement (34) ;
**caractérisé en ce qu'**il comprend, en outre,
un dispositif de fixation (28) conforme à l'une des revendications 1 à 4, le pare-soleil (16) étant fixé aux portions longitudinales (40a, 40b) dudit dispositif (28) et l'équipement (34) étant fixé aux portions longitudinales (40a, 40b) et à la portion transversale (42) du dispositif de fixation (28) et comprenant, en outre, une plaque de soutien (30) apte être fixée aux portions longitudinales (40a, 40b) et/ou à la portion transversale (42) et à soutenir l'équipement (34).

6. Véhicule automobile selon la revendication 5, **caractérisé en ce que** l'équipement (34) est un module de coussin gonflable, configuré pour se déployer essentiellement vers l'avant et vers le bas, devant le conducteur ou le passager avant du véhicule.

7. Véhicule selon l'une des revendications 5 et 6, **caractérisé en ce que** les portions longitudinales (40a, 40b) et/ou la portion transversale (42) du dispositif de fixation (28) sont soudées à la traverse de toit (36).

8. Véhicule selon l'une des revendications 5 à 7, **caractérisé en ce que** le pare-soleil (16) comprend une liaison pivotante (24) fixée à une des portions longitudinales (40b) du dispositif de fixation (28) et un crochet détachable (26) fixé à l'autre des deux portions longitudinales (40a).

## Patentansprüche

1. Vorrichtung (28) zur Befestigung einer Sonnenblende (16) am Dach (6) eines Kraftfahrzeugs, umfassend:
- zwei Längsabschnitte (40a, 40b), die geeignet sind, an einer Querstrebe des Daches (36) befestigt zu werden und jeweils ein Befestigungselement (24, 26) der Sonnenblende (16) aufzunehmen; und
- einen Querabschnitt (42), der hinter den Längsabschnitten (40a, 40b) angeordnet ist;
wobei die Längs- (40a, 40b) und Querabschnitte (42) einen Raum begrenzen, der geeignet ist, eine Ausrüstung (34), wie ein Airbagmodul, aufzunehmen, ferner umfassend eine Halteplatte (30), die geeignet ist, an den Längsabschnitten (40a, 40b) und/Oder am Querabschnitt (42) befestigt zu werden und die Ausrüstung (34) zu halten, **dadurch gekennzeichnet, dass** die Halteplatte (30) Rippen (50) aufweist, die vorzugsweise durch Verformung der Platte (30) gebildet sind, und die sich längs erstrecken.

2. Vorrichtung (28) nach Anspruch 1, **dadurch gekennzeichnet, dass** die Längsabschnitte (40a, 40b) und/oder der Querabschnitt (42) in Form von Befestigungslaschen ausgeführt sind.

3. Vorrichtung (28) nach einem der vorhergehenden Ansprüche, **dadurch gekennzeichnet, dass** die Halteplatte (30) einen in Bezug zum Hauptabschnitt (54) der Platte (30) gebogenen hinteren Abschnitt (52) umfasst, um durch Kontakt mit dem eine Rippe (48) bildenden Querabschnitt (42) zusammenwirken zu können.

4. Vorrichtung (28) nach einem der Ansprüche 1 bis 3, **dadurch gekennzeichnet, dass** der Querabschnitt (42) ausgeführt ist, um vorzugsweise durch Schweißen direkt an mindestens einem der Längsabschnitte (40a, 40b) befestigt zu werden.

5. Kraftfahrzeug mit einer Windschutzscheibe (4) und einem Dach (6) mit einer vorderen Querstrebe (36), umfassend:
- eine Ausrüstung (34), die an der Dachquerstrebe (36) oben an der Windschutzscheibe (4) befestigt ist;
- eine Sonnenblende (16), die an der Dachquerstrebe (36) unterhalb der Ausrüstung (34) befestigt ist;
**dadurch gekennzeichnet, dass** es ferner umfasst:
eine Befestigungsvorrichtung (28) nach einem der Ansprüche 1 bis 4, wobei die Sonnenblende (16) an den Längsabschnitten (40a, 40b) der Vorrichtung (28) befestigt ist, und wobei die Ausrüstung (34) an den Längsabschnitten (40a, 40b) und an dem Querabschnitt (42) der Befestigungsvorrichtung (28) befestigt ist und ferner eine Halteplatte (30) umfasst, die geeignet ist, an den Längsabschnitten (40a, 40b) und/oder an dem Querabschnitt (42) befestigt zu werden und die Ausrüstung (34) zu halten.

6. Kraftfahrzeug nach Anspruch 5, **dadurch gekennzeichnet, dass** die Ausrüstung (34) ein Airbagmodul ist, das ausgeführt ist, sich im Wesentlichen nach vorne und nach unten vor dem Fahrer oder dem Beifahrer des Fahrzeugs zu entfalten.

7. Fahrzeug nach einem der Ansprüche 5 und 6, **dadurch gekennzeichnet, dass** die Längsabschnitte (40a, 40b) und/oder der Querabschnitt (42) der Befestigungsvorrichtung (28) an die Dachquerstrebe (36) geschweißt sind.

8. Fahrzeug nach einem der Ansprüche 5 bis 7, **dadurch gekennzeichnet, dass** die Sonnenblende (16) eine Schwenkverbindung (24), die an einem der Längsabschnitte (40b) der Befestigungsvorrichtung (28) befestigt ist, und einen lösbaren Haken (26) umfasst, der an dem anderen der zwei Längsabschnitte (40a) befestigt ist.

## Claims

1. A device (28) for attaching a sun visor (18) to the roof (6) of a motor vehicle, including:
- two longitudinal portions (40a, 40b) able to be attached to a cross-member (36) of the roof and to each be able to receive an element (24, 26) for attaching the sun visor (16); and
- a transverse portion (42) arranged at the rear of the longitudinal portions (40a, 40b);
the longitudinal portions (40a, 40b) and transverse portions (42) delimiting a space able to receive an equipment (34) such as an airbag module, including, in addition, a support plate (30) able to be attached to the longitudinal portions (40a, 40b) and/or to the transverse portion (42) and to support the equipment (34), **characterized in that** the support plate (30) has ribs (50), preferably formed by deformation of the plate (30), which extend longitudinally.

2. The device (28) according to claim 1, **characterized in that** the longitudinal portions (40a, 40b) and/or the transverse portion (42) are realized in the form of attachment lugs.

3. The device (28) according to one of the preceding claims, **characterized in that** the support plate (30) includes a rear portion (52) which is bent with respect to the principal portion (54) of the plate (30), so as to be able to cooperate by contact with the transverse portion (42) forming a rib (48).

4. The device (28) according to one of claims 1 to 3, **characterized in that** the transverse portion (42) is configured to be attached, preferably by welding, directly to at least one of the longitudinal portions (40a, 40b).

5. A motor vehicle with a windscreen (4) and a roof (6) with a front cross-member (36), including:
- an equipment (34) attached to the cross-member (36) of the roof, above the windscreen (4);
- a sun visor (16), attached to the cross-member (36) of the roof, below the equipment (34);
**characterized in that** it includes, in addition,
a device (28) for attaching according to one of claims 1 to 4, the sun visor (16) being attached to the longitudinal portions (40a, 40b) of said device (28) and the equipment (34) being attached to the longitudinal portions (40a, 40b) and to the transverse portion (42) of the attachment device (28) and including, in addition, a support plate (30) able to be attached to the longitudinal portions (40a, 40b) and/or to the transverse portion (42) and able to support the equipment (34).

6. The motor vehicle according to claim 5, **characterized in that** the equipment (34) is an airbag module, configured so as to deploy essentially toward the front and downwards, in front of the driver or the front passenger of the vehicle.

7. The vehicle according to one of claims 5 and 6, **characterized in that** the longitudinal portions (40a, 40b) and/or the transverse portion (42) of the attachment device (28) are welded to the roof cross-member (36).

8. The vehicle according to one of claims 5 to 7, **characterized in that** the sun visor (16) includes a pivoting link (24) attached to one of the longitudinal portions (40b) of the attachment device (28) and a detachable hook (26) attached to the other of the two longitudinal portions (40a).
